Europäisches Patentamt

**European Patent Office**

**Office européen des brevets**

(19)

(11) Publication number: **0 012 707**
A1

(12) # EUROPEAN PATENT APPLICATION

(21) Application number: **79710100.3**

(22) Date of filing: **31.10.79**

(51) Int. Cl.³: **B 60 S 9/14**

(30) Priority: **03.11.78 UY 31678**

(43) Date of publication of application: **25.06.80**
**Bulletin 80/13**

(84) Designated Contracting States: **DE FR GB IT**

(71) Applicant: **Fitermann, Claus, Reichenberger Strasse 130, D-1000 Berlin 36 (DE)**

(72) Inventor: **Martin Ruiz, José, Hipolito**
**Irigoyen 1407 bis-Piso 6 Apartamento 602, Montevideo (UY)**

(54) Vehicle autoelevator and lateral displacer system.

(57) The disclosure relates to a hydraulic mechanism, controlled from the vehicle that effectively allows lifting the vehicle wheels, one side at a time, or the four at the same time, and to then impart a lateral displacement to the vehicle.

The support means include lateral pairs of wheels (18) which are transversally positioned to the vehicle and have self-propelling means (17, 19) in order to park a car by alligning it with the empty space and actuating the system. The vehicle will then displace itself into the space without the need of operating the steering wheel. The system comprises a hydraulic pump (3), operationally connected to a liquid reservoir (2), and connected to a distribution box (5) that include a set of actionable derivative valves (10, 11) which supply liquid flow to pairs of vertically positioned hydraulic pistons (13), secured by fixing means to each of the lateral sides of the vehicle, and adjacent to the vehicle wheels (20), the descending steps (15) of said pistons being provided with shaft boring pillow-blocks (16) having between them an axis (17) for each side, each piston having mounted thereon pairs of transversely positioned reduced diameter wheels each axis being provided with power means (19, 23–27) capable of imparting a rotational movement thereto.

Description:
------------

Background of the Invention
---------------------------

This invention relates to a vehicle autoelevator and lateral displacer mechanism, and is of particular application to all motor vehicles.
Multiple advantages are inherent in this invention. It is well known that, except for persons endowed with extreme dexerity acquired through long experience, the parking of automobiles between parked vehicles offers a degree of difficulty when the available space is only slightly larger than the width of the vehicle to be parked. This circumstance requires a large number of manoevers in order to position the vehicle in the intended space. The manoeuvers are almost impossible for weaker drivers because, if the operated vehicle is large, since most of the operations involving turning of the wheels have to be made with a stationary vehicle, considerable effort and strength on the part of the driver is required.
In other cases, even when the operation may not be complicated, a heavy stream of traffic may impede carying on the maneuvers.
The subject mechanism not only efficiently solves the above mentioned difficulties, but also includes an automatic jack that may, if desired, lift the four wheels of the car at the same time,

Objects of the invention
------------------------

The principal object of this invention is to provide a mechanism, permanently incorporated in a motor vehicle, which allows the vehicle's partial or total elevation, in other

words, it can raise the motor vehicle vertically at the four wheels at the same time.

Another principal object of the invention includes the feature that a fully elevated motor vehicle may be laterally displaced by power means which may be either the vehicle's own motor means or any other power means as in the case of an electric or pneumatic motor activated by the vehicle's own motor.

## Summary

The subject matter relates to a hydraulic mechanism, controlled from the vehicle, that effectively allows lifting the vehicle wheels, one side at a time, or the four at the same time, and to then impart a lateral displacement to the vehicle. The support means include lateral pairs of wheels which are transversally positioned to the vehicle and have self-proppelling means, in order to park a car by allignig it whith the empty space and actuating the mechanism. The vehicle will then displace itself into the space whithout the need of operating the steering wheel. The mechanism comprises a hydraulic pump, operationally connected to a liquid reservoir, and connected to a distribution box that includes a set of actionable derivative valves which supply liquid flow to pairs of vertically positioned hydraulic pistons, secured by fixing means to each of the lateral sides of the vehicle, and adjacent to the vehicle wheels, the descending steps of said pistons being provided whith shaft boring pillow-blocks having between them an axis for each side, each piston having mounted thereon pairs of transversally positioned reduced diameter wheels adjacent to the said vehicle wheels, each axis being provided whith power means capable of imparting a rotational movement thereto.

## Brief description of the drawings

For a clear understanding of the object of this invention and to determine its true nature, there are attached two sheets of schematic drawings which comprise a preferred, but not limitative, form of the invention as defined in the claims following this description. Therefore, it may be possible to introduce thereto any number of non-substantial modifications whithout altering the scope of the claimed subject matter.

In the drawings, identical reference numerals correspond to identical or similar parts, the following is specified:

FIGURE 1 and 1bis: shows a partial assembly of the mechanism including the hydraulic pump, the distribution box and the liquid reservoir.

FIGURE 2, shows the mechanism corresponding to one of the vehicle laterals in an operative condition, in other words, at a time when the vehicle wheels are normally resting on the pavement.

FIGURE 3, shows the aforementioned mechanism after being activated and shows the elevated vehicle wheels while the vehicle is supported by the transversally oriented wheels of the apparatus.

FIGURE 4, shows the power means mechanism corresponding to the vehicle lateral.

FIGURE 5 shows in detail valves that couple and uncouple transmission axle with transversal wheels of the vehicle transmission axis.

Description of the preferred embodiement
‾‾‾‾‾‾‾‾‾‾‾‾‾‾‾‾‾‾‾‾‾‾‾‾‾‾‾‾‾‾‾‾‾‾‾

As shown in the drawings, the mechanism comprises a pipe-line 1 for the liquid contained in reservoir 2, which pipe-line is connected to a gear pump 3 or any other equivalent means, from which another pipe-line 4 projects into the distributor box 5 from which line 4 follows into pipe-lines 6,7,8, and 9 via valves.

Valves 10 and 11 regulate flow of liquid toward the pipe-line in accordance with the programmed control or commanded action.

0012707

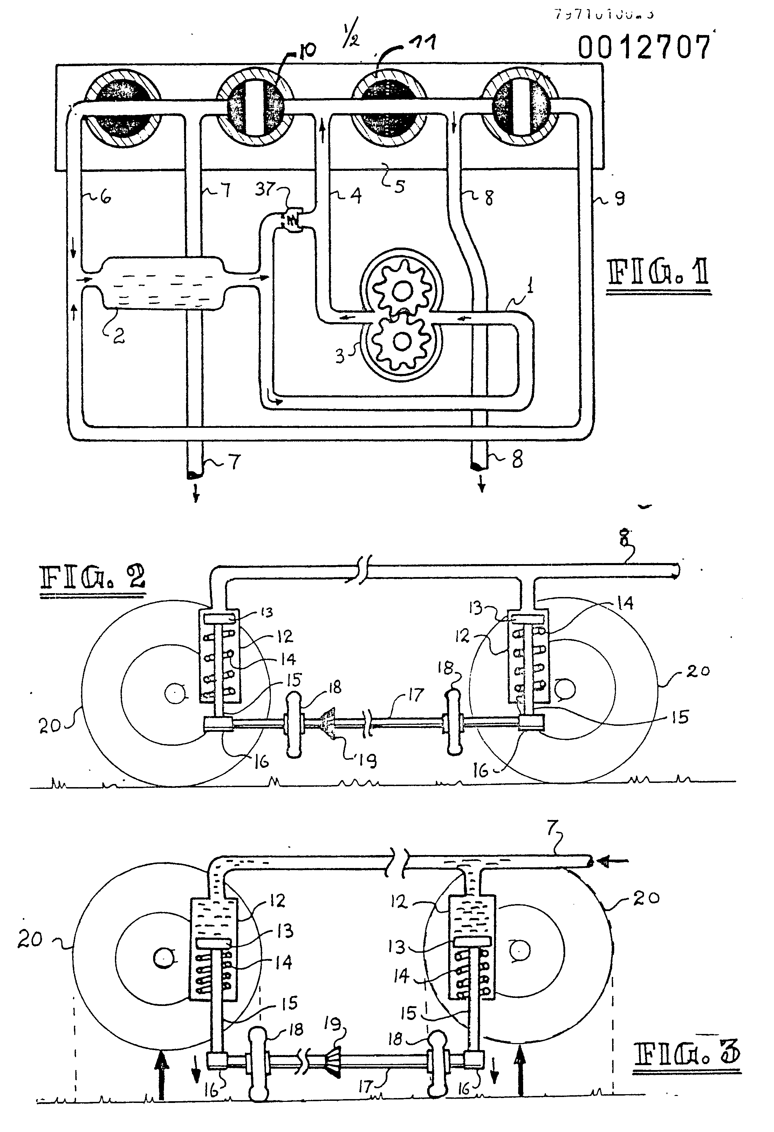

For example, pipe-lines 7 and 8 are oriented toward cylinders 12 (Fig. 2 to 4) while pipe-lines 6 and 9 provide a fluid return toward reservoir 2. Cylinders 12 include pistons 13 which may electively have a double effect with suitable valves, or operate as in the represented example, wherein expansive springs 14 normally retract stems 15 and their corresponding stems vertically upward.

The pistons are adapted to the type of vehicle involved, in such a way that the elevation, preferably, should take place from each wheel axis to avoid suspension displacement which would otherwise require extreme long pistons.

Said piston stems 15 contact pillow-blocks 16 in which axles 17 are journalled and on which axles are mounted wheels 18, axles 17 being provided with power means, for example, gear means 19 connected to the vehicle transmission means.

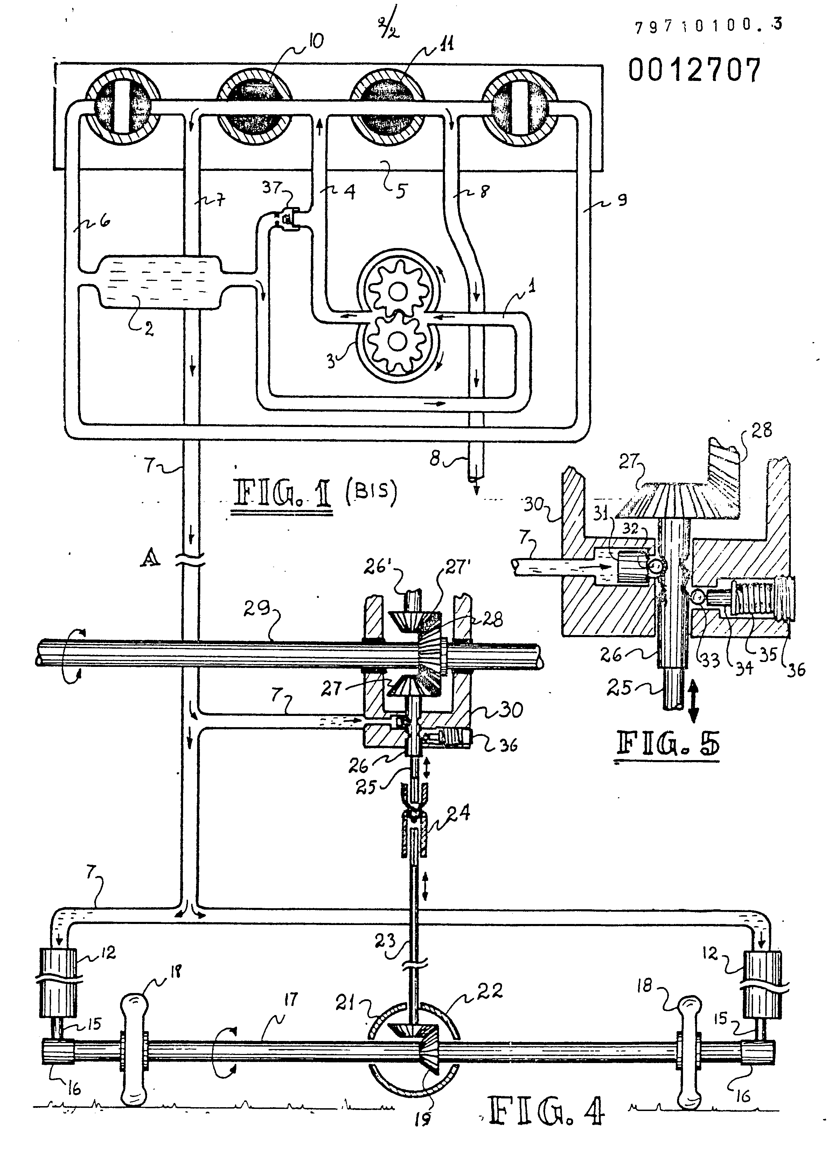

Referring now to figures 4 and 5, there is shown the power means for driving the gear 19, it being understood that there is an identical device for each front and back set of wheels of the vehicle.

It should be noted that Figure 1(bis) shows valves 10 and 11 open and can be connected to Figure 4 at 'A' which is shown between Figures 1(bis) and 4.

With reference to the cited figures, the sector power means of the vehicle transversal wheels 18 (Fig. 4) comprises a conical gear 19 secured to axle 17. Said conical gear 19 contacts a corresponding conical gear 21, said gears being protected by closure means 22. Conical gear 21 is secured to a transversal shaft 23, the other end thereof being longitudinally grooved and inserted into one of the coincidentally grooved internal ends of a shaft carrier 24. The shaft carrier 24 is fixed at the end of element 25 by means of a universal joint and allows transfer of rotational movement to shaft 23 on its downward movement following the movement of the entire assembly connected to axle 17. At the other end of shaft carrier 24 a shaft 25 is inserted in a fashion similar to that of shaft 23. Shaft 25 is provided with an axle enlargement 26 inserted into a conical gear 27 (Figs. 4 and 5) which is joined to conical

- 6 -

0012707

gear 28 which is secured to the vehicle transmission axis 29. Conical gear 28 is also symmetrically joined with conical gear 27' which is secured to enlarged axle 26' which constitutes a repetition of arranged components and contacts of the other power lateral means of the vehicle. Said conical gear 28 is covered by cover means 30 having in the portion pierced by enlarged axis 26 on one side thereof, one orifice for the passing of fluid in pipe-line 7, which, when in operation as illustrated, exerts pressure on piston 31 (Fig. 5) which in turn exerts pressure on a sphere 32 which inserts into a corresponding goove of enlarged axis 26 causing its displacement to a coincidental joint. Said displacement of axis 26 similarly joints conical gear 27 with gear 28 consequently receiving the rotational movement of the vehicle transmission axis 29. On the other side, cover means 30 is provided with a cavity similar to the above described wherein a sphere is pressured by a bolt 34 which is under pressure from a compression spring 35 regulated by screw 36. Enlarged axis 26 also includes another groove in coincidence with sphere 33, which appears in the drawings positioned immediatly adjacent to said sphere 33 due to the fact that the system is in operation. Upon termination of this operation (by opening valves to lines 6 and 9) a complete pressure drop occurs in pipe-lines 7 and 8.

In the illustrated case, line 7, piston 31 and sphere 32 remain floating in a pressureless fluid and spring 35, which exerts pressure on bolt 34 causes, the latter to penetrate in the groove, outwardly displacig axis 26 and uncoupling conical gear 27 from gear 28, thus uncoupling power transmission.

In order to forsee any eventualities, the fluid circuit carries, inserted on pipe-line 4, a safety valve 37, which opens a circuit to the reservoir 2 and/or the gear pump 3.

Operation
----------

In line with the above described system, when the liquid flows to piston 12 (see Fig. 3), axle 17 will descend on one side if

0012707

the mechnism is to be used as a jack, or on both sides at the same time if the vehicle is to be laterally displaced. This manoeuver is performed using a handle included in the dash board, or any other convenient location, to only activate corresponding valves, in which case, by connecting power means that activate axle 17 in its proper direction, the vehicle supported wheels 18 mounted on axle 17 (one to each side) will displace itself laterally because its wheels 20 are then suspended in the air.

This mechanism provides great advantages for parking of automobiles in any space whithout the need of extreme dexterity or strength and also is advantageous for the purpose of making repairs in emergency situations.

Having described the invention and shown how it can be utilized, the constructional and functional advantages of the invention are consequently explained.

- 8 -

0012707

Claims

1. A vehicle displacement and autoelevator system for wheeeled vehicles, which comprises:
   (a) a hydraulic pump(3)
   (b) a liquid reservoir connected to said pump (2),
   (c) distribution means connected to said pump and said reservoir, said distribution means including:
   (d) lifting means (12),
   (e) remotely controlled valve means (10,11) for directing fluid from said pump (3) to said pistons (13) for controlling the position of said pistons (13),
   (f) means for biasing said pistons in a first predetermined position (13,14),
   (g) an axle (17) having a pair of wheels (18) thereon secured to said pistons (13) at opposite ends of said axle (17) and movable with said pistons (13), and
   (h) means (19) on said axle (17) for receiving power from a remote source (30) for rotating said axle (17).

2. A vehicle displacement and autoelevator system as set forth in claim 1, wherein the pistons (12,13) have double action valves.

3. A vehicle displacement and autoelevator system as set forth in claims 1, and 2, wherein said means for biasing said pistons are expanding springs (14).

4. A vehicle displacement and autoelevator system as set forth in claim 1, wherein said vehicle includes power means (21-27) coupled to said means on said axle for receiving power.

0012707

5. A vehicle displacement and autoelevator system as set forth in claim 1. wherein said lifting means (12-18) is positioned along one side of said vehicle, further including a second lifting mean on the opposite side of said vehicle, said remotely cotrolled valve means (10,11) selectively operating said lifting means and said second lifting means singly or together.

FIG. 1

FIG. 2

FIG. 3

0012707

FIG. 1 (BIS)

FIG. 5

FIG. 4

-2-

# EUROPEAN SEARCH REPORT

European Patent Office

0012707

Application number

EP 79 71 0100

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>US - A - 1 565 134</u> (WILLIAMS) <br> * Entire document * <br><br> -- | 1,2,4, 5 | B 60 S 9/14 |
| X | <u>US - A - 1 615 861</u> (WILLIAMS) <br> * Entire document * <br><br> -- | 1,2,4, 5 | |
| X | <u>US - A - 1 928 305</u> (BLAKESLEY) <br> * Entire document * <br><br> -- | 1,3,4, 5 | TECHNICAL FIELDS SEARCHED (Int.Cl. 3) |
| X | <u>US - A - 2 840 174</u> (RECTOR) <br> * Entire document * <br><br> -- | 1,3,4, 5 | B 60 S |
| X | <u>US - A - 2 872 991</u> (COLLINS) <br> * Entire document * <br><br> -- | 1,2,4, 5 | |
| X | <u>US - A - 3 002 577</u> (WILLIAMS) <br> * Entire document * <br><br> -- | 1,2,4, 5 | |
| X | <u>GB - A - 994 837</u> (HANSEN) <br> * Entire docyment * <br><br> -- | 1,3,4, 5 | CATEGORY OF CITED DOCUMENTS <br><br> X: particularly relevant <br> A: technological background <br> O: non-written disclosure <br> P: intermediate document <br> T: theory or principle underlying the invention |
| X | <u>DE - C - 456 390</u> (V. DADELSEN) <br> * Entire document * <br><br> -- <br> ./. | 1,3,4, 5 | E: conflicting application <br> D: document cited in the application <br> L: citation for other reasons |

&: member of the same patent family, corresponding document

The present search report has been drawn up for all claims

| Place of search | Date of completion of the search | Examiner |
|---|---|---|
| The Hague | 21-03-1980 | ESPEEL |

EPO Form 1503.1 06.78

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | CH - A - 286 303 (BONDUELLE)<br>* Entire document * | 1,3,4,5 | |
| | -- | | |
| | FR - A - 2 088 176 (TARGE) | 1,3,4,5 | |
| | DE - A - 2 040 237 (WOLTERING) | 1,3,4,5 | |
| | FR - A - 1 467 969 (PACY-PLAS-TIQUES) | 1,2,4,5 | |
| | ---- | | **TECHNICAL FIELDS SEARCHED (Int. Cl. 3)** |

EPO Form 1503.2  06.78